# EUROPEAN PATENT APPLICATION

(11) **EP 3 637 579 A1**
(43) Date of publication of application: **15.04.2020**
(21) Application number: 19200351.5
(22) Date of filing: 30.09.2019
(51) Int. Cl.: H02J 7/00

(54) **BATTERY CHARGING SYSTEM AND CONTROL METHOD THEREFOR**

(30) Priority: 09.10.2018 JP 2018190768
(71) Applicant: IDX Company, Ltd., Kawasaki-shi, Kanagawa 214-0021 (JP)
(72) Inventor: MOTODA, Noriaki, Kawasaki-shi, Kanagawa 214-0021 (JP)
(74) Representative: Grünecker Patent- und Rechtsanwälte PartG mbB

(57) **Abstract**

Provided is a battery charging system capable of efficiently charging a plurality of batteries and of facilitating the reuse of the batteries having been charged. Also provided is a control method for the battery charging system. The battery charging system includes a charger 70 and a plurality of batteries 1 (1-1∼n). The charger 70 has a control section 80 controlling the order of charging the plurality of batteries 1. Each battery 1 has a first attaching part 11 and a second attaching part 31. The first attaching part 11 is attachable to a battery attaching part 71 of the charger 70 or the second attaching part 31 of another battery 1 to transmit and receive electric power and information to and from the charger 70 or the another battery 1. The second attaching part 31 is attachable to the first attaching part 11 of another battery 1 to transmit and receive electric power and information to and from the another battery 1. The control section 80 performs control such that when a plurality of batteries 1 (1-1∼n) are to be charged in a state where the batteries 1 are attached to the battery attaching part 71 into a stack, the rearmost one 1(1-n) of batteries 1 in the stack which have not completed charging is preferentially charged.

## Description

### BACKGROUND OF THE INVENTION

### Technical Field

The present invention relates to a battery charging system suitably used to charge batteries detachably attached to an electronic device such as a video camera, and also relates to a control method for the battery charging system.

### Background Art

Among video cameras, there are large-sized video cameras for professional use, which are generally rested on the user's shoulder to perform video recording. A battery for this type of video camera is detachably attached to the rear side of the video camera (i.e. the side opposite to the lens of the video camera). The video camera may be equipped with not only one but a plurality of batteries in order to perform video recording for a long time. When a plurality of batteries are attached to the video camera, batteries are successively stacked in the following manner. A first battery is attached to the rear side of the video camera, and a second battery is attached to the rear side of the first battery. Further, third and subsequent batteries are successively attached in the same way as the above. At this time, the batteries are electrically connected in parallel, thereby allowing the battery capacity to be increased in proportion to the number of batteries connected together, and thus making it possible to use the stacked batteries in a video camera having high electric power consumption and to perform video recording for a long time.

Batteries of the type described above are charged by using a charger exclusively used to charge the above-described type of batteries. This type of charger is generally configured to charge the batteries, one by one, by attaching each battery to a battery attaching part of the charger. It should be noted that one type of conventional charger is provided with a plurality of battery attaching parts so that a plurality of batteries can be charged simultaneously.

### Citation List

Patent Literature 1: WO 2001/073869

### SUMMARY OF THE INVENTION

With the above-described conventional charger, however, batteries are charged one by one by attaching each battery to a battery attaching part provided on the charger. Therefore, when a large number of batteries are to be charged, every time the charging of one battery is completed, another battery is attached to the battery attaching part of the charger in place of the charged battery, and this operation needs to be repeated. Thus, the charging operation is troublesome.

The above-described batteries are configured such that a plurality of batteries can be coupled together into a stack, and that the batteries are electrically connected in parallel. Therefore, the plurality of batteries can be charged simultaneously by attaching the foremost one of the stacked batteries to the battery attaching part of the charger.

However, to simultaneously charge a plurality of parallel-connected batteries, a long time is needed to complete the charging of all the batteries. Thus, it is impossible to meet the customers' demand for rapid charging.

The present invention has been made in view of the above-described circumstances. Accordingly, an object of the present invention is to provide a battery charging system capable of efficiently charging a plurality of batteries and of facilitating the reuse of the batteries having been charged. Another object of the present invention is to provide a control method for the battery charging system.

The present invention provides a battery charging system including a charger, and a plurality of batteries to be charged by the charger. The charger has a control section controlling the order of charging the plurality of batteries attached to the charger. Each of the batteries has a first attaching part provided at the front side of the battery, and a second attaching part provided at the rear side of the battery. The first attaching part is attachable to a battery attaching part of the charger or to the second attaching part of another battery to transmit and receive electric power and information to and from the charger or the another battery. The second attaching part is attachable to the first attaching part of another battery to transmit and receive electric power and information to and from the another battery. The control section of the charger performs control such that when a plurality of batteries are to be charged in a state where the batteries are attached to the battery attaching part of the charger into a stack, the rearmost one of batteries in the stack which have not completed charging is preferentially charged.

According to the present invention, even when a plurality of batteries are attached to the battery attaching part of the charger into a stack, the plurality batteries can be efficiently charged because the batteries are charged in a determined order.

Further, according to the present invention, the rearmost one of batteries in the stack which have not completed charging is preferentially charged. Therefore, the charging of the rearmost battery can be completed in a short time. When a charged battery is to be used, the rearmost battery alone can be detached from the charger to use (or together with a battery which has already completed charging and which is subsequent to the above-described rearmost battery, if there is such a battery). Even when the rearmost battery is detached as described above, there is no interference with the charging of a battery in the stack which precedes the detached battery, and the charging of the preceding battery can be started immediately. Accordingly, a plurality of batteries can be charged efficiently, and the batteries having been charged can be reused easily.

In addition, according to the present invention, the control section of the charger performs control such that the temperature of a battery currently being charged is detected, and when the temperature detected exceeds a predetermined chargeable temperature range, the charging of the battery is stopped, and the rearmost one of other batteries in the stack which have not completed charging is preferentially charged.

According to the present invention, when there is an interference with the charging process due to the fact that the temperature of a battery currently being charged exceeds a chargeable temperature range, the charging of the battery is stopped, and another battery is charged. Therefore, the batteries can be continuously charged safely and efficiently.

In addition, according to the present invention, when the temperature of the battery stopped from charging returns to within the chargeable temperature range, the control section of the charger resumes the charging of the battery and stops the charging of the another battery currently being charged.

According to the present invention, when the temperature of a battery stopped from charging returns to within the chargeable temperature range and there is no interference with the charging process, the charging of the battery is resumed. Therefore, the charging process can be continued safely.

In addition, the present invention provides a control method for a battery charging system including a charger and a plurality of batteries to be charged by the charger. The control method includes the steps of: attaching a plurality of batteries to be charged to a battery attaching part of the charger into a stack; preferentially charging the rearmost one of batteries in the stack which have not completed charging; and preferentially charging, when charging of the rearmost battery is completed, the rearmost one of other batteries in the stack which have not completed charging, this step being repeated until all the batteries to be charged have been charged.

According to the present invention, a plurality of batteries are sequentially charged in a state where the batteries are attached to the battery attaching part of the charger into a stack; therefore, the plurality of batteries can be charged efficiently.

Further, according to the present invention, a plurality of batteries are sequentially charged from the rearmost one of batteries in the stack which have not completed charging; therefore, the charging of the rearmost battery can be completed in a short time. In addition, when a battery having been charged is to be used, the rearmost battery alone can be detached from the charger to use (or together with a battery which has already completed charging and which is subsequent to the above-described rearmost battery, if there is such a battery). Even when the rearmost battery is detached as described above, there is no interference with the charging of a battery in the stack which precedes the detached battery, and the charging of the preceding battery can be started immediately. Accordingly, a plurality of batteries can be charged efficiently, and the batteries having been charged can be reused easily.

### Advantages of Invention

According to the present invention, a plurality of batteries can be charged efficiently, and the batteries having been charged can be reused easily.

Other objects and advantages of the present invention will become apparent from the following detailed description of illustrated embodiments of the invention.

### BRIEF DESCRIPTION OF THE DRAWINGS

Fig. 1 is a perspective view of a battery 1 according to an embodiment of the present invention, showing the external appearance of the battery 1 as seen from the front side thereof.
Fig. 2 is a perspective view of the battery 1, showing the external appearance of the battery 1 as seen from the rear side thereof.
Fig. 3 is a perspective view of the battery 1 when a protection cover 353 is open.
Fig. 4 is a schematic circuit diagram showing a power circuit incorporated in the battery 1.
Fig. 5 is an illustration showing one example of a functional block diagram of a control section 60 incorporated in the battery 1.
Fig. 6 is an illustration showing a method of attaching a plurality of batteries 1 to a video camera 100.
Fig. 7 is a perspective view showing a charger 70 and batteries 1-1 to 1-3.
Fig. 8 is an illustration showing one example of a functional block diagram of a control section 80 incorporated in the charger 70.
Fig. 9 is a perspective view showing the way in which the batteries 1-1 to 1-3 are attached to the charger 70.
Fig. 10 is a schematic operation flowchart showing an operation of the control section 60.
Fig. 11 is a schematic operation flowchart showing charging control performed by the control section 80.

### DETAILED DESCRIPTION OF THE PREFERRED EMBODIMENTS

Embodiments of the present invention will be explained below in detail with reference to the accompanying drawings.

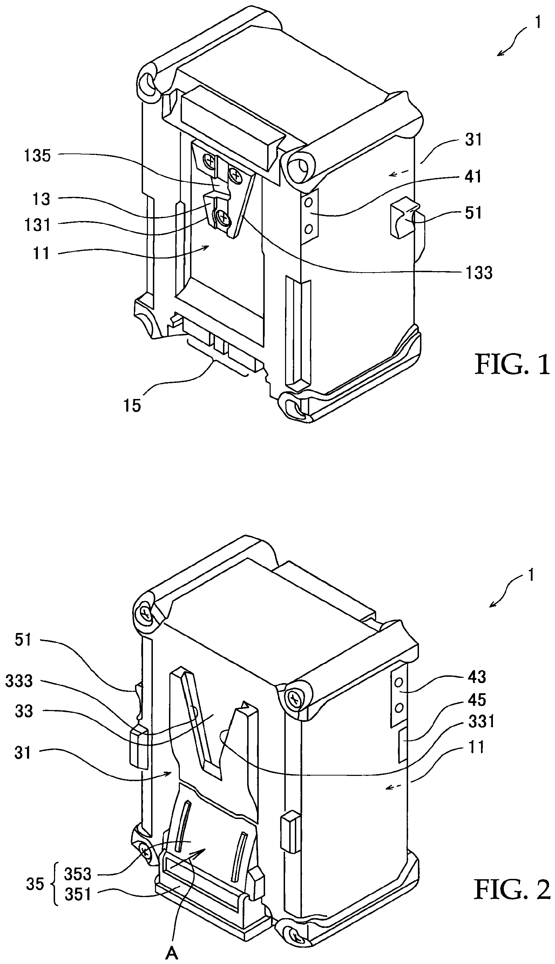

Fig. 1 is a perspective view of a battery 1 for use in a battery charging system according to an embodiment of the present invention, showing the external appearance of the battery 1 as seen from the front side thereof. Fig. 2 is a perspective view of the battery 1, showing the external appearance of the battery 1 as seen from the rear side thereof. It should be noted that the side of the battery 1 that is to be attached to a charger 70 (described below) shall be referred to as "the front side", and a side of the battery 1 opposite to the front side shall be referred to as "the rear side". As shown in Figs. 1 and 2, the battery 1 has a substantially quadrangular prism shape. The front side surface of the battery 1 shall be referred to as "the first attaching part 11", and the rear side surface thereof shall be referred to as "the second attaching part 31".

As shown in Fig. 1, the first attaching part 11 has a mounting member 13 attached thereto at an upper central portion of the surface thereof. The mounting member 13 is a plate-shaped member having a substantially V-shaped configuration. The first attaching part 11 further has a connector part 15 provided at a lower end portion thereof. The mounting member 13 has left and right sides defined as engaging sides 131 and 133, respectively. Of the two engaging sides 131 and 133, one engaging side 131 has a lever insertion recess 135 formed near the center thereof. The engaging sides 131 and 133 each have a lower side abutting against the surface of the first attaching part 11, and an upper side separate from the surface of the first attaching part 11. The upper side overhangs more outward than the lower side (in other words, the upper side projects at an acute angle). That is, the engaging sides 131 and 133 are shaped so as to be engageable with V-groove shaped engaging sides 331 and 333 of the below-described second attaching part 31. The connector part 15 has an opening provided in the lower side thereof. The distal ends of a plurality (six in this example) of female-side connecting pins (not shown) are exposed in a row in the opening. The female-side connecting pins line up in a row, which comprise female-side connecting pins for transmitting (charging and discharging) electric power and female-side connecting pins for transmitting and receiving data to and from a computer.

As shown in Fig. 2, the second attaching part 31 has a fitting-receiving portion 33 formed on a central upper portion of the surface thereof. The fitting-receiving portion 33 comprises a substantially V-shaped recess. The second attaching part 31 further has a connector part 35 provided at a central lower portion of the surface thereof. The fitting-receiving portion 33 has left and right sides defined as engaging sides 331 and 333, respectively. The engaging sides 331 and 333 have grooves of V-shaped cross-section formed therein, respectively. These grooves are formed so as to be engageable with the engaging sides 131 and 133 of the first attaching part 11. It should be noted that the engaging side 331 has a lever insertion hole (not shown) formed near the center thereof such that a claw-shaped lever projects from the lever insertion hole toward the engaging side 333 from the engaging side 331 or withdraws into the lever insertion hole. When projecting from the lever insertion hole, the lever is engaged with a lever insertion recess 135 provided in another battery 1. The lever withdraws into the lever insertion hole in response to the pressing of a release button 51 installed on a side surface of the battery 1. The lever is allowed to project from the lever insertion hole by releasing the release button 51 from the pressing force. It should be noted that whether or not the release button 51 is depressed is detected by a detection sensor, and that data concerning the depression of the release button 51 is sent to a control section 60 (described below).

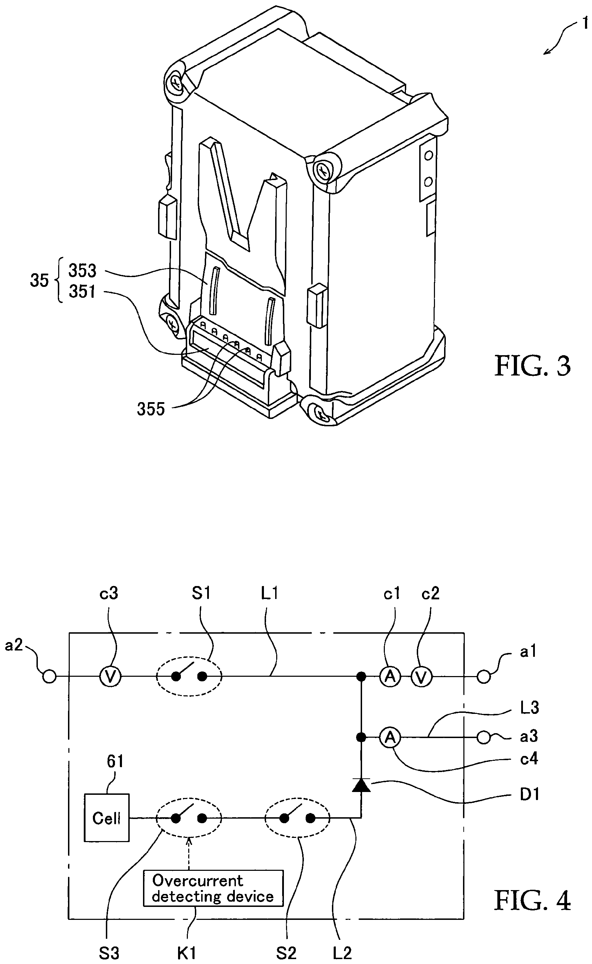

The connector part 35 comprises a connector body portion 351 and a protection cover 353 installed on the top of the connector body portion 351. When the protection cover 353 is pressed from the upper side thereof, i.e. pressed in the direction of the arrow A shown in Fig. 2, the protection cover 353 is opened as shown in Fig. 3. When the protection cover 353 is opened, the upper side of the connector body portion 351 is opened. The upper side of the connector body portion 351 thus opened has an opening formed with dimensions and a shape suitable for insertion of the connector part 15 of another battery 1. The connector body portion 351 has a plurality (six in this example) of male-side connecting pins 355 installed in a row inside the opening in the upper side of the connector body portion 351. It should be noted that, when released from the pressing force, the protection cover 353 is automatically returned to the previous position shown in Fig. 2 by a resilient biasing device (not shown) resiliently biasing the protection cover 353.

For example, two batteries 1 arranged as stated above are prepared, and from above the second attaching part 31 of one of the batteries 1 (hereinafter referred to as "the first battery 1"), the first attaching part 11 of the other battery 1 (hereinafter referred to as "the second battery 1") is slidingly lowered. Consequently, the mounting member 13 of the second battery 1 is inserted and engaged in the fitting-receiving portion 33 of the first battery 1. At the same time, the connector part 15 of the second battery 1 presses the protection cover 353 of the first battery 1, and while pushing open the protection cover 353, the connector part 15 is inserted into the connector body portion 351 of the first battery 1. Thus, the female-side connecting pins of the second battery 1 and the male-side connecting pins 355 of the first battery 1 are connected to each other, respectively.

Further, as shown in Figs. 1 and 2, the battery 1 has two sets of accessory terminal connecting parts 41 and 43 provided on left and right side surfaces thereof, respectively, to take out electric power. In addition, a USB (Universal Serial Bus) connecting part 45 is formed near the accessory terminal connecting part 43. To the accessory terminal connecting parts 41 and 43, for example, a power supply cord for a light may be connected to light up the light by using electric power of a cell 61 of the battery 1. To the USB connecting part 45, a USB device can be connected. In this case, also, electric power of the cell 61 of the battery 1 is used as a power supply for the USB device.

Fig. 4 is a schematic circuit diagram showing a power circuit incorporated in the battery 1. As shown in the figure, the battery 1 incorporates at least one cell 61 for charging and discharging electric power. The battery 1 further has a power conducting circuit L1 connecting between a terminal a1 connected to the female-side connecting pins of the first attaching part 11 and a terminal a2 connected to the male-side connecting pins 355 of the second attaching part 31. Further, the battery 1 has a power supply circuit L2 connected between the cell 61 and the power conducting circuit L1.

The power conducting circuit L1 has a first switch S1 installed in an intermediate part thereof. The power conducting circuit L1 further has a current sensor c1 and a voltage sensor c2 between the first switch S1 of the power conducting circuit L1 and the terminal a1. Further, a voltage sensor c3 is connected between the first switch S1 of the power conducting circuit L1 and the terminal a2. The power supply circuit L2 has a second switch S2 installed in an intermediate part thereof. Further, a third switch S3 is connected between the second switch S2 of the power supply circuit L2 and the cell 61. The power supply circuit L2 further has a reverse-flow prevention diode D1 connected between the second switch S2 and an accessory circuit L3 (described below). The first switch S1 and the second switch S2 change their on/off state in response to an instruction from the below-described control section 60. The third switch S3 is a switch turned off by a command from an overcurrent detecting device K1 when detecting that the electric current discharged from the cell 61 is an overcurrent. Accordingly, the third switch S3 is normally in an on state. It should be noted that output signals from the current sensor c1, the voltage sensor c2, and the voltage sensor c3 and an output signal delivered when the overcurrent detecting device K1 detects an overcurrent are sent to the control section 60. The reverse-flow prevention diode D1 is a diode for preventing a charging current from flowing into the battery 1 from another battery 1 when a plurality of batteries 1 are connected in parallel. It should be noted that when a voltage for charging is applied to the battery 1 at the terminal a1 side by a charger 70 (described below), the cell 61 can be charged through a circuit (not shown) bypassing (short-circuiting) the reverse-flow prevention diode D1.

In addition, the power supply circuit L2 has an accessory circuit L3 connected thereto at a point closer to the power conducting circuit L1 than the second switch S2. The accessory circuit L3 is a circuit supplying electric power from the cell 61 to various accessories. That is, the accessory circuit L3 has a terminal a3 connected to the accessory terminal connecting parts 41 and 43 and the USB connecting part 45. The accessory circuit L3 has a current sensor c4 connected to an intermediate point thereof. An output signal from the current sensor c4 is also sent to the control section 60.

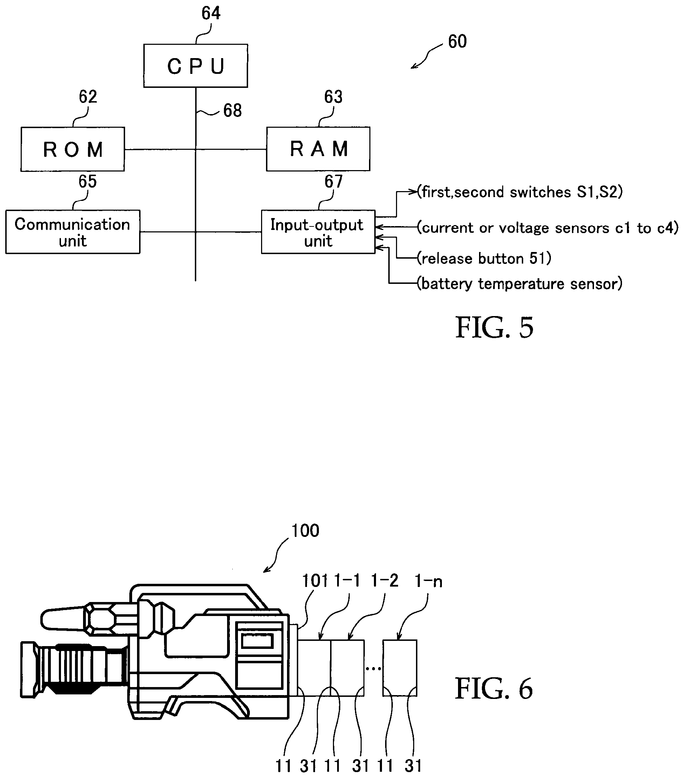

Fig. 5 is an illustration showing one example of a functional block diagram of the control section 60 incorporated in the battery 1. As shown in the figure, the control section 60 has a CPU (Central Processing Unit) 64, a ROM (Read-Only Memory) 62, a RAM (Random-Access Memory) 63, a communication unit 65, and an input-output unit 67. These constituent elements are connected to each other through a communication line 68, e.g. a bus. The CPU 64 controls the operation of the control section 60 by executing a control program stored in the ROM 62. The ROM 62 stores various items of information such as the above-described control program. The RAM 63 temporarily stores various items of information. The communication unit 65 is a communication interface for communication with various external devices which may be connected to the battery 1. The communication unit 65 performs data transmission and reception between itself and the control section 60 of another battery 1 or a control section 80 of the charger 70 or the control section of a video camera 100 connected to the battery 1 through pins used for data communication among the female-side connecting pins and the male-side connecting pins 355. The input-output unit 67 comprises A/D (Analog-to-Digital) and D/A (Digital-to-Analog) converters, etc., and has functions to output various instruction signals from the control section 60 to the first and second switches S1 and S2 and so forth and to input measurement signals from the current and voltage sensors c1 to c3 and a battery temperature sensor and a signal from the release button 51. The battery temperature sensor is a temperature sensor incorporated in the battery 1 to measure the temperature of the battery 1. The output of the battery temperature sensor is input to the control section 60 and thereafter transmitted to the control section 80 of the below-described charger 70 through the communication unit 65.

It should be noted that the battery 1 is attached to the video camera 100 as follows. As shown in Fig. 6, first, the first attaching part 11 of a first battery 1-1 is attached to a battery attaching part 101 of a video camera 100. Next, the first attaching part 11 of a second battery 1-2 is attached to the second attaching part 31 of the first battery 1-1. Further, third and subsequent batteries 1-3 to 1-n are successively attached in the same way as the above. Consequently, a plurality of batteries 1-1, 1-2, • • •, 1-n are attached to the video camera 100.

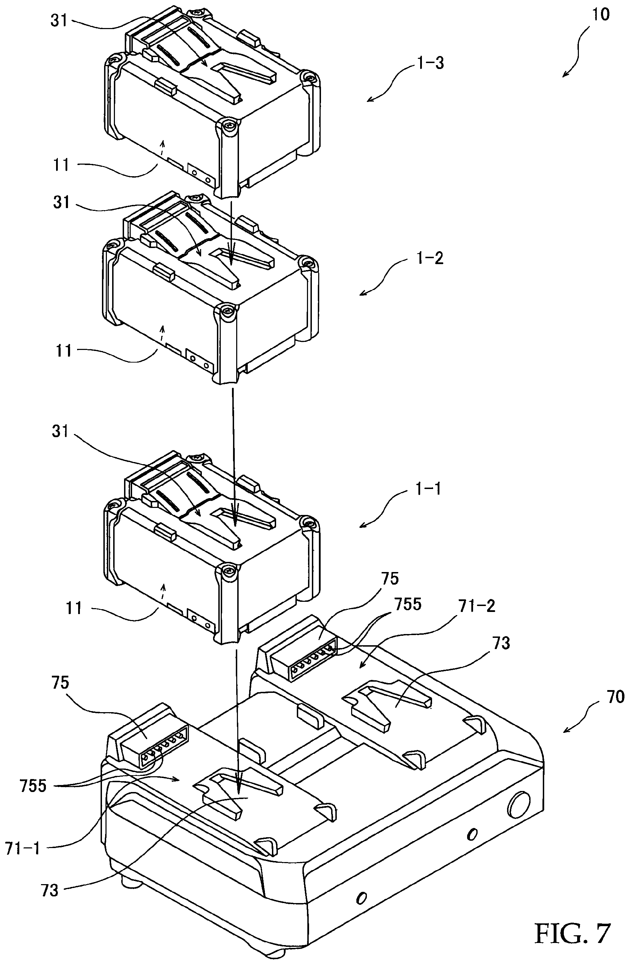

Fig. 7 is a perspective view showing a charger 70 and a plurality of batteries 1-1, 1-2, and 1-3 to be attached to the charger 70. The charger 70 and the batteries 1-1 to 1-3 constitute in combination a battery charging system 10.

As shown in Fig. 7, the charger 70 has a substantially rectangular shape and has a pair of battery attaching parts 71 (71-1 and 71-2) formed in parallel on an upper surface thereof. The battery attaching parts 71 (71-1 and 71-2) each have a structure substantially identical to that of the second attaching part 31 of the battery 1. That is, each battery attaching part 71 has a fitting-receiving portion 73 formed in the center of a surface thereof. The fitting-receiving portion 73 has a structure similar to that of the fitting-receiving portion 33 of the battery 1. The battery attaching part 71 further has a connector part 75 formed near one end of the surface thereof. The connector part 75 has a structure similar to that of the connector body portion 351 of the connector part 35 of the battery 1 (i.e. the connector part 75 has no member corresponding to the protection cover 353 of the connector part 35). That is, the connector part 75 has an opening in a side thereof facing the fitting-receiving portion 73. The opening is formed with dimensions and a shape suitable for receiving the connector part 15 of the battery 1. The connector part 75 has a plurality (six in this example) of male-side connecting pins 755 installed in a row inside the opening of the connector part 75. It should be noted that the battery 1 attached to the battery attaching part 71 can be detached by depressing a release button (not shown) in the same way as the battery 1.

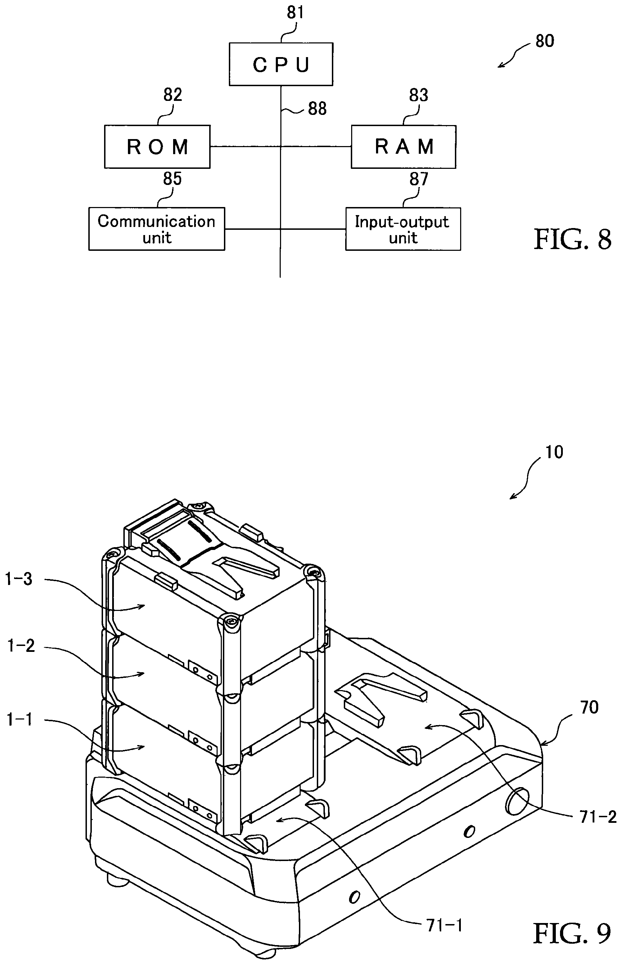

Fig. 8 is an illustration showing one example of a functional block diagram of the control section 80 incorporated in the charger 70. As shown in the figure, the control section 80 has a CPU (Central Processing Unit) 81, a ROM (Read-Only Memory) 82, a RAM (Random-Access Memory) 83, a communication unit 85, and an input-output unit 87. These constituent elements are connected to each other through a communication line 88, e.g. a bus. The CPU 81 controls the operation of the control section 80 by executing a control program stored in the ROM 82. The ROM 82 stores various items of information such as the above-described control program. The RAM 83 temporarily stores various items of information. The communication unit 85 is a communication interface for communication with various external devices which may be connected to the charger 70. The communication unit 85 performs data transmission and reception between itself and the control section 60 of each battery 1 (1-1 to 1-3) connected to the charger 70 through pins used for data communication among the male-side connecting pins 755 provided in the connector part 75. The input-output unit 87 comprises A/D (Analog-to-Digital) and D/A (Digital-to-Analog) converters, etc. to output various on/off instruction signals to various switches (e.g. a switch for enabling or stopping charging of the battery 1) installed in the charger 70 and to input operation signals from various operation buttons.

The charger 70 arranged as stated above may have at least one battery 1 attached to each battery attaching part 71 (71-1, 71-2). Fig. 7 shows the way in which three batteries 1-1, 1-2, and 1-3 are attached to one battery attaching part 71-1. More specifically, first, the first attaching part 11 of the first battery 1-1 is attached to the battery attaching part 71-1. At this time, the connector part 15 of the battery 1-1 is inserted into the connector part 75 of the battery attaching part 71-1, and the female-side connecting pins of the battery 1-1 are connected to the male-side connecting pins 755, respectively, of the battery attaching part 71-1. Similarly, the first attaching part 11 of the battery 1-2 is attached to the second attaching part 31 of the battery 1-1, and the first attaching part 11 of the battery 1-3 is attached to the second attaching part 31 of the battery 1-2. Consequently, the three batteries 1-1 to 1-3 are attached to the battery attaching part 71-1 of the charger 70 into a stack, as shown in Fig. 9. Thus, it becomes possible to supply electric power from the charger 70 to the batteries 1-1 to 1-3 and possible to transmit and receive data between the control sections 80 and 60.

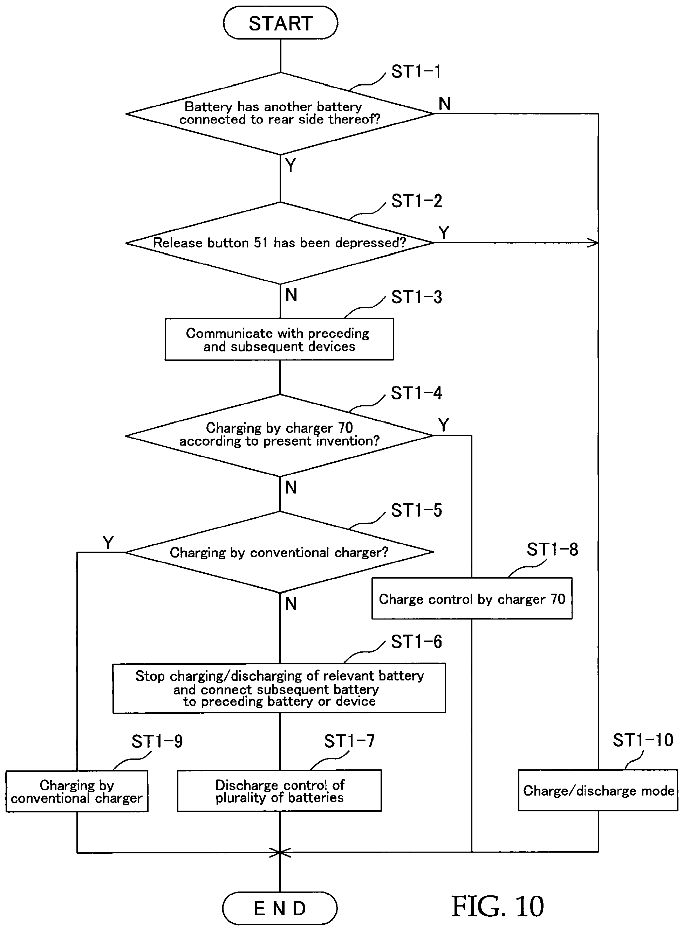

Fig. 10 is a schematic operation flowchart showing one example of the operation of the control section 60 of any one of the batteries 1-1, 1-2, • • •, 1-n attached to the above-described charger 70 or video camera 100. It should be noted that when the battery 1 is in a stand-alone state, the first switch S1 shown in Fig. 4 is off, and the second and third switches S2 and S3 shown in Fig. 4 are on, i.e. the battery 1 is in the state of being chargeable and dischargeable by itself.

Referring to Fig. 10, the CPU 64 first judges whether or not the battery 1 has another battery (subsequent battery) 1 connected to the rear side thereof by detecting an output of the voltage sensor c3 (step ST1-1). If it is judged that the battery 1 has no subsequent battery 1 connected thereto ("No" at step ST1-1), the process proceeds to step ST1-10, at which charging/discharging of the battery 1 is enabled (charge/discharge mode). In other words, the battery 1 performs charging/discharging in the same way as an ordinary stand-alone battery. Specifically, with the first switch S1 left off, the second and third switches S2 and S3 are kept in the on state. That is, when detecting that the battery 1 has no subsequent battery attached thereto, the control section 60 closes the circuit performing charging/discharging to enable charging the battery 1 from the charger 70 or the like attached to the first attaching part 11 and discharging electric power from the battery 1 to the video camera 100 or the like.

On the other hand, if it is judged at step ST1-1 that the battery 1 has a subsequent battery connected to the rear side thereof ("Yes" at step ST1-1), then it is judged whether the release button 51 of the battery 1 has been depressed (step ST 1-2). If it is judged that the release button 51 has been depressed ("Yes" at step ST1-2), the battery 1 is going to be detached and therefore placed in the same state as when the battery 1 operates stand-alone, i.e. the above-described charge/discharge mode in which the second and third switches S2 and S3 are on, with the first switch S1 left off (step ST1-10).

Next, if it is judged at step ST1-2 that the release button 51 has not been depressed, the process proceeds to step ST1-3, at which the battery 1 performs communication with other devices, i.e. a battery in the stack which is subsequent to the battery 1, a battery in the stack which precedes the battery 1 if there is such a battery, and the charger 70 or the video camera 100 (step ST1-3). By so doing, it is possible to detect whether the battery 1 is attached to the charger 70, or attached to the video camera 100, or attached to a conventional charger which charges batteries one by one, etc. It is also possible to detect how many preceding batteries and subsequent batteries are attached to the front and rear sides, respectively, of the battery 1.

If it is detected at step ST1-3 that the battery 1 is connected to the charger 70 according to this embodiment directly or indirectly through a preceding battery, the process proceeds from step ST1-4 to step ST1-8, at which the charging control described below is performed for the battery 1 and the preceding and subsequent batteries by the charger 70.

If it is detected at step ST1-3 that the battery 1 is connected to a conventional charger directly or indirectly through a preceding battery, the process proceeds from steps ST1-4 and ST1-5 to step ST1-9, at which charging is performed only for the battery 1 connected directly to the charger. The term "conventional charger" as used herein means a charger that does not perform communication with a plurality of batteries attached thereto but simply charges batteries attached thereto. That is, the battery 1 remains in the charge/discharge mode in which the first switch S1 is off, and the second and third switches S2 and S3 are on. Therefore, even if a plurality of batteries 1 are attached to the charger into a stack, the charging voltage of the charger is not supplied to the subsequent batteries, but charging is performed only for the cell 61 of the battery 1 attached directly to the charger.

If it is detected at the above-described step ST1-3 that the video camera 100 is connected to the battery 1, the process proceeds from steps ST1-4 and ST1-5 to step ST1-6, at which the second switch S2 is turned off to stop charging/discharging of the relevant battery 1, and at the same time, the first switch S1 is turned on to enable discharging electric power from the subsequent battery attached to the rear side of the battery 1 to the preceding battery attached to the front side of the battery 1 or to the video camera 100 attached to the front side of the battery 1.

Thus, discharging electric power from the batteries 1 other than the rearmost battery 1, which is the rearmost of the stacked batteries, is stopped; therefore, the electric power of the other batteries 1 can be conserved. Thus, the electric power of the rearmost battery 1 is surely first consumed at all times; therefore, the video camera 100 can be continuously used easily, without being stopped, simply by replacing only the rearmost battery 1.

As has been explained above, discharging electric power to the video camera 100 is performed by the rearmost battery 1, which is the rearmost of the stacked batteries, in principle. However, when the required discharge electric power cannot be obtained only by the relevant battery 1, a control process is executed at step ST 1-7 so as to additionally discharge electric power from a battery preceding the battery 1 in parallel. The discharge control of a plurality of batteries at step ST1-7, however, is not the gist of the present invention; therefore, an explanation thereof is omitted.

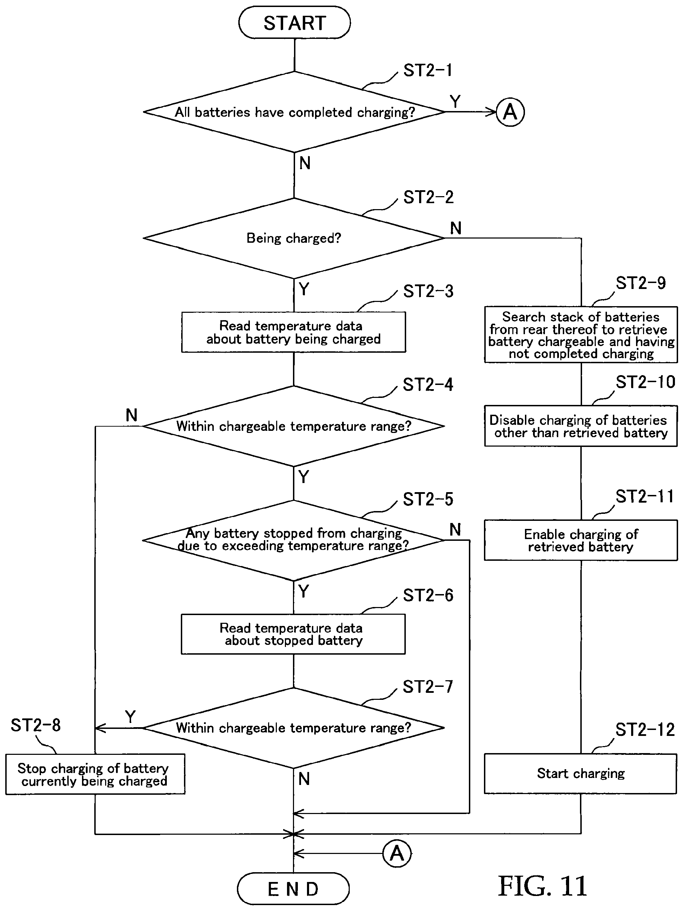

Fig. 11 is a schematic operation flowchart showing charging control of a plurality of batteries 1 by the charger 70 at step ST1-8. The following explanation will be made with regard to an example in which, as shown in Fig. 9, a plurality of batteries 1 (1-1 to 1-3) are connected to one battery attaching part 71-1 of the charger 70 into a stack. Referring to Fig. 11, if the CPU 81 of the charger 70 judges through communication with each battery 1 that all the batteries 1 have completed charging ("Yes" at step ST2-1), charging is not performed.

On the other hand, if at least one battery 1 has not completed charging ("No" at step ST2-1) and if charging by the charger 70 has not been started ("No" at step ST2-2), the process proceeds to step ST2-9, at which the stack of batteries 1 on the charger 70 is searched from the rear of the battery stack to retrieve a battery 1 which is chargeable and which has not completed charging. That is, a search is performed to retrieve the rearmost one of the batteries 1 which have not completed charging.

At step ST2-10, the batteries 1 other than the retrieved battery 1 are disabled from being charged (i.e. the first switch S1 is turned on, and the second switch S2 is turned off), while the retrieved battery 1 is enabled to be charged (i.e. the first switch S1 is turned off, and the second switch S2 is turned on) at step ST2-11. Then, charging of the retrieved battery 1 is started (step ST2-12).

Next, the process returns to steps ST2-1 and ST2-2, and if it is judged that any one of the batteries 1 is being charged ("Y" at step ST2-2), temperature data (input from a battery temperature sensor c5) about the battery 1 being charged is input from the control section 60 of the battery 1 (step ST2-3).

If, at step ST2-4, the input temperature data is not within a preset chargeable temperature range, it is dangerous to continue the charging; therefore, the process proceeds to step ST2-8, at which the charging of the battery 1 currently being charged is stopped.

In this case, the process returns to steps ST2-1 and ST2-2 again. Because no battery 1 is currently being charged, the answer at step ST2-2 is "No", and the process proceeds to step ST2-9, at which the stack of batteries 1 on the charger 70 is searched from the rear of the battery stack to retrieve another battery 1 which is chargeable and which has not completed charging.

Then, at steps ST2-10 and ST2-11, the batteries 1 other than the retrieved battery 1 are disabled from being charged (i.e. the first switch S1 is turned on, and the second switch S2 is turned off), while the retrieved battery 1 is enabled to be charged (i.e. the first switch S1 is turned off, and the second switch S2 is turned on). Then, charging of the retrieved battery 1 is started (step ST2-12).

Then, the process returns to steps ST2-1 and ST2-2 again. Because charging is currently being performed, the answer at step ST2-2 is "Yes", and the process proceeds to step ST2-3, at which temperature data about the battery 1 currently being charged is input (step ST2-3). If the input temperature data is within the preset chargeable temperature range ("Yes" at step ST2-4), then it is judged whether or not there is a battery 1 stopped from charging because temperature data about the battery 1 is in excess of the temperature range (step ST2-5). In the case of this example, there is a battery 1 stopped from charging because temperature data about the battery 1 is in excess of the temperature range ("Yes" at step ST2-5). Therefore, temperature data about the stopped battery 1 is read (step ST2-6), and if the temperature of the battery 1 has not returned into the chargeable temperature range ("No" at step ST2-7), the charging of the battery 1 currently being charged is continued. On the other hand, if the temperature of the battery 1 has already returned into the chargeable temperature range ("Yes" at step ST2-7), the charging of the battery 1 currently being charged is stopped (step ST2-8).

If the charging of the battery 1 currently being charged is stopped, the process proceeds to step ST2-9 via step ST2-1 ("No") and step ST2-2 ("No"). At step ST2-9, the stack of batteries 1 on the charger 70 is searched from the rear of the battery stack to retrieve a battery 1 which is chargeable and which has not completed charging (i.e. a battery 1 stopped from charging because temperature data about the battery 1 is in excess of the temperature range), and charging of only the retrieved battery 1 is started (steps ST2-10 to ST2-12).

The above-described operation will be explained below by way of an example in which three batteries 1-1 to 1-3 are connected to one battery attaching part 71-1 of the charger 70 into a stack, as shown in Fig. 9, and in which all the batteries 1-1 to 1-3 have not completed charging. That is, when charging by the charger 70 is started in the above-described state, charging of only the battery 1-3, which is the rearmost battery, is preferentially first started. Upon completion of charging the battery 1-3, charging of the next rearmost battery 1-2 is started. The foremost battery 1-1 is charged last.

If, for example, the internal temperature of the battery 1-3 exceeds the chargeable temperature range during charging the battery 1-3, the charging of the rearmost battery 1-3 is stopped temporarily, and charging of the next rearmost battery 1-2 is started. If the internal temperature of the battery 1-3 returns to within the chargeable temperature range during charging the battery 1-2 (or during charging the battery 1-1 after the completion of the charging of the battery 1-2), the charging of the battery 1-2 or 1-1, which is being charged, is stopped, and the charging of the battery 1-3 is resumed. When the charging of the battery 1-3 is completed, the charging of the battery 1-2 or 1-1, which has been stopped from charging, is resumed.

As has been stated above, the battery charging system 10 includes a charger 70 and a plurality of batteries 1 (1-1 to 1-n) to be charged by the charger 70. The charger 70 has a control section 80 controlling the order of charging the plurality of batteries 1 attached to the charger 70. Each battery 1 has a first attaching part 11 provided at the front side thereof and a second attaching part 31 provided at the rear side thereof. The first attaching part 11 is attachable to a battery attaching part 71 of the charger 70 or to the second attaching part 31 of another battery 1 to transmit and receive electric power and information to and from the charger 70 or the another battery 1. The second attaching part 31 is attachable to the first attaching part 11 of another battery 1 to transmit and receive electric power and information to and from the another battery 1. The control section 80 of the charger 70 performs control such that when a plurality of batteries 1 are to be charged in a state where the batteries 1 are attached to the battery attaching part 71 of the charger 70 into a stack, the charger 70 charges the rearmost (backmost) one of batteries 1 in the stack which have not completed charging.

The battery charging system 10 can efficiently charge a plurality of batteries 1 attached to the battery attaching part 71 of the charger 70 into a stack because the battery charging system 10 is configured to charge the plurality of batteries 1 one by one in a determined order. Further, the battery charging system 10 charges a plurality of batteries 1 attached to the charger 70 into a stack in such a manner that the rearmost one of batteries 1 in the stack which have not completed charging is preferentially charged. Therefore, the charging of the rearmost battery 1 can be completed in a short time. When a charged battery 1 is to be used, the rearmost battery 1 alone can be detached from the charger 70 to use (or together with a battery 1 which has already completed charging and which is subsequent to the above-described rearmost battery 1, if there is such a battery 1). Even when the rearmost battery 1 is detached as described above, there is no interference with the charging process for a battery 1 preceding the detached battery 1, and the charging of the preceding battery 1 can be started immediately. Accordingly, a plurality of batteries 1 can be charged efficiently, and the batteries 1 having been charged can be reused easily.

The control section 80 of the charger 70 performs control such that the temperature of a battery 1 currently being charged is detected, and when the temperature detected exceeds a predetermined chargeable temperature range, charging of the battery 1 is stopped, and the rearmost one of other batteries 1 in the stack which have not completed charging is charged. With this configuration, when there is an interference with the charging process due to the fact that the temperature of a battery 1 currently being charged exceeds the chargeable temperature range, the charging of the battery 1 is stopped, and another battery 1 is charged. Accordingly, the batteries 1 can be continuously charged safely and efficiently.

Further, the control section 80 of the charger 70 is configured such that when the temperature of a battery 1 stopped from charging returns to within the chargeable temperature range, the charging of the battery 1 is resumed, and the charging of the another battery 1 being charged is stopped. Thus, when the temperature of a battery 1 stopped from charging returns to within the chargeable temperature range and there is therefore no interference with the charging process, the charging of the battery 1 is resumed. Accordingly, the charging process can be continued safely.

Although an embodiment of the present invention has been described above, the present invention is not limited to the foregoing embodiment but can be modified in a variety of ways without departing from the scope of the technical idea set forth in the appended claims and described in the specification and the accompanying drawings. It should be noted that any shape, structure or configuration that offers the operation/working-effect of the invention in this application is within the scope of the technical idea of the invention in this application even if it is not directly mentioned in the specification or the drawings. The embodiments described above and shown in the drawings can be combined with each other as long as there are no contradictions in the object, configuration, etc. In addition, the contents described above and shown in the drawings, even a part of them, can be respectively independent embodiments, and the embodiment of the present invention is not limited to one embodiment as a combination of the above description and the drawings.

### Reference Signs List

- 1 (1-1 to 1-n):: battery
- 10:: battery charging system
- 11:: first attaching part
- 31:: second attaching part
- 70:: charger
- 71:: battery attaching part
- 80:: control section
- 100:: video camera

## Claims

1. A battery charging system (10) comprising:
a charger (70), and
a plurality of batteries (1) to be charged by the charger (70);
the charger (70) having a control section (80) controlling an order of charging the plurality of batteries (1) attached to the charger (70);
the batteries (1) each having a first attaching part (11) provided at a front side of the battery (1), and a second attaching part (31) provided at a rear side of the battery (1);
the first attaching part (11) being attachable to one of a battery attaching part (71) of the charger (70) and the second attaching part (31) of another battery (1) to transmit and receive electric power and information to and from one of the charger (70) and the another battery (1);
the second attaching part (31) being attachable to the first attaching part (11) of another battery (1) to transmit and receive electric power and information to and from the another battery (1);
the control section (80) of the charger (70) performing control such that when a plurality of the batteries (1) are to be charged in a state where the batteries (1) are attached to the battery attaching part (71) of the charger (70) into a stack, a rearmost one of batteries (1) in the stack which have not completed charging is preferentially charged.

2. The battery charging system (10) of claim 1, wherein the control section (80) of the charger (70) performs control such that a temperature of a battery (1) currently being charged is detected, and when the temperature detected exceeds a predetermined chargeable temperature range, charging of the battery (1) is stopped, and a rearmost one of other batteries (1) in the stack which have not completed charging is preferentially charged.

3. The battery charging system (10) of claim 2, wherein when the temperature of the battery (1) stopped from charging returns to within the chargeable temperature range, the control section (80) of the charger (70) resumes the charging of the battery (1) and stops charging of the another battery (1) currently being charged.

4. A control method for a battery charging system (10) including a charger (70) and a plurality of batteries (1) to be charged by the charger (70), the control method comprising the steps of:
attaching a plurality of the batteries (1) to be charged to a battery attaching part (71) of the charger (70) into a stack;
preferentially charging a rearmost one of batteries (1) in the stack which have not completed charging; and
preferentially charging, when charging of the battery (1) is completed, a rearmost one of other batteries (1) in the stack which have not completed charging, this step being repeated until all the batteries (1) to be charged have been charged.
